Europäisches Patentamt

European Patent Office

Office européen des brevets

(19)

(11) **EP 1 525 647 B1**

(12) **EUROPEAN PATENT SPECIFICATION**

(45) Date of publication and mention
of the grant of the patent:
**21.06.2006 Bulletin 2006/25**

(51) Int Cl.:
*H01S 3/30* (2006.01)     *H01S 3/17* (2006.01)
*C03C 4/00* (2006.01)     *C03C 3/12* (2006.01)

(21) Application number: **02767266.6**

(22) Date of filing: **26.07.2002**

(86) International application number:
**PCT/EP2002/008383**

(87) International publication number:
**WO 2004/015828 (19.02.2004 Gazette 2004/08)**

(54) **OPTICAL FIBER FOR RAMAN AMPLIFICATION**

OPTISCHE FASER FÜR RAMANVERSTÄRKUNG

FIBRE OPTIQUE POUR AMPLIFICATION RAMAN

(84) Designated Contracting States:
**AT BE BG CH CY CZ DE DK EE ES FI FR GB GR
IE IT LI LU MC NL PT SE SK TR**

(43) Date of publication of application:
**27.04.2005 Bulletin 2005/17**

(73) Proprietor: **Pirelli & C. S.p.A.**
**20123 Milano (IT)**

(72) Inventors:
  • **DAI, Guojun**
    **I-20052 Monza (IT)**
  • **TASSONE, Francesco, Maria**
    **I-20043 Arcore (IT)**

(74) Representative: **Giannesi, Pier Giovanni**
**Pirelli & C. S.p.A.,**
**Viale Sarca, 222**
**20126 Milan (IT)**

(56) References cited:
  **FR-A- 2 479 180          US-A- 3 661 600**
  **US-A- 4 652 536          US-A- 4 732 875**
  **US-A- 5 283 212          US-A1- 2002 082 156**
  **US-B1- 6 194 334**

  • **PATENT ABSTRACTS OF JAPAN vol. 2000, no.
    21, 3 August 2001 (2001-08-03) -& JP 2001 109026
    A (NIPPON TELEGR & TELEPH CORP), 20 April
    2001 (2001-04-20) cited in the application**
  • **OVCHARENKO N V ET AL: "High refractive index
    and magneto-optical glasses in the systems
    TeO2-WO3-Bi2O3 and TeO2-WO3-PbO"
    JOURNAL OF NON-CRYSTALLINE SOLIDS,
    NORTH-HOLLAND PHYSICS PUBLISHING.
    AMSTERDAM, NL, vol. 291, no. 1-2, October 2001
    (2001-10), pages 121-126, XP004306745 ISSN:
    0022-3093**

## Description

### Field of the invention

The present invention relates to an optical fiber for Raman amplification and to a Raman amplifier comprising said optical fiber. In particular, said fiber is an optical fiber comprising a tellurite glass.

### Background art

To compensate attenuation, optical communication systems often provide for amplification of optical signals at regular intervals along optical transmission fibers. The amplification may be produced by amplifiers based on rare-earth elements such as erbium or by amplifiers based on the Raman effect.

Fiber Raman amplifiers are attracting great attention, because of their capability to increase the transmission capacity. Raman amplifiers offer several advantages, such as low noise, greater flexibility in choosing the signal wavelength and a flat and broad gain bandwidth. The greater flexibility in choosing the signal wavelength mainly depends on the fact that the Raman peak of a material, exploited for the amplification of the signal, is dependent practically only on the pump wavelength, differently from what happens for example in erbium-doped fiber amplifiers, in which the choice of the signal wavelength is restricted by the stimulated emission cross-section of erbium. The broad gain bandwidth of Raman amplifiers can be much enlarged, for example by using multiple pump sources. Such a broad gain bandwidth may represent a way to extend the usable optical bandwidth outside the conventional C-band and the extended L-band of the erbium-doped fiber amplifiers. Lumped Raman amplifiers may also play an important role to compensate for not only the fiber attenuation but also losses of other optical components, such as connectors, switches, splitters and so on.

While many glass compositions have been proposed in connection with erbium doped fiber amplifiers, little work has been done in developing glasses suitable for Raman amplification.

For instance, US patent no. 6,352,950 discloses alkali-tungsten-tellurite glass compositions doped with a rare earth element, erbium in particular, capable of fluorescing when pumped with appropriate energy.

Similarly, International Patent Application WO 01/27047, also relating to erbium doped amplification, discloses erbium doped tellurite glasses including one or more oxides of the following elements: Ta, Nb, W, Ti, La, Zr, Hf, Y, Gd, Lu, Sc, Al and Ga.

On the other hand, dispersion compensating fibers (DCF) or, more generally, fibers having high non-linearity have been initially proposed for realizing fiber Raman amplifiers. For example, T. Tsuzaki et al., in "Broadband Discrete Fiber Raman Amplifier with High Differential Gain Operating Over 1.65 $\mu$m-band", Optical Fiber Conference 2001 (MA3-1/3), describe a high differential-gain (0.08 dB/mW), low-noise (<5.0dB), broadband (30 nm) and flat-gain (< $\pm$ 1dB) fiber Raman amplifier operating over the 1.65 $\mu$m-band which employs a low-loss highly nonlinear fiber (HNLF) and a broadened pump light source.

European Patent Application EP 1 184 943 discloses a Raman amplifier including a chalcogenide glass optical fiber. As mentioned in said patent application, chalcogenide glasses are not oxide glasses.

JP patent application Publication No. 2001-109026 discloses a fiber Raman amplifier where the optical fiber is based on a tellurite (i.e. tellurium dioxide) glass, stating that with such fibers it is possible to obtain a gain coefficient about 30 times greater than the one obtained with quartz fibers. Said tellurite glass has a structure comprising $TeO_2$ - $ZnO$ - $M_2O$ - $L_2O_3$, wherein M is one or more alkaline element, and L is at least one or more of Bi, La, Al, Ce, Yb and Lu. The applicant has however observed that the enhancement of the Raman gain correlated with these glass compositions is not completely satisfactory. In particular, both the maximum intensity and the total cross-sectional area of the Raman spectra of said tellurite glasses are less than one hundred times higher with respect to the corresponding parameters of pure silica glass. The above Japanese patent application further mentions that other tellurite glasses (for example $TeO_2$-$WO_3$) can be used for obtaining a high gain coefficient in Raman amplifiers, without however giving any detail about the composition and optical properties of said glasses.

As observed by the applicant, there is thus the need of developing further glass compositions to be used in optical fibers for Raman amplifiers.

### Summary of the invention

The Applicant has now found that tellurite glasses comprising at least two further metal oxides can be used to manufacture an optical fiber suitable for Raman amplification. In particular, the simultaneous presence of at least two different metal oxides in a tellurite based glass composition allows to optimise either the optical or the thermal properties (or both) of an optical fiber for Raman amplification, with respect to the same properties of the respective binary glass compositions of each of said oxides with tellurite. Among the optical properties of a glass for Raman amplification, particularly important are the maximum intensity of the emission peak and the broadness of the emission bandwidth.

Among the thermal properties, particularly important is the thermal stability of the glass composition, as determined through the thermal stability index (Tx-Tg) of the glass. The thermal stability index is the difference between the crystallization temperature of the glass Tx, i.e. the temperature at the onset of crystal formation, and its glass transition temperature Tg. A good thermal stability of a glass is in general preferable for its processability; typically, the higher the value of the (Tx-Tg) index, the better the processability of the glass.

Furthermore, the Applicant has found tellurite based glass compositions including at least one additional metal oxide which show a particularly high Raman gain, and which are thus suitable for manufacturing optical fibers to be used in a Raman amplifier.

According to a first aspect as defined in claim 1, the present invention relates to a Raman amplifier comprising at least one optical fiber and at least one pump laser, optically coupled to said optical fiber, said pump laser being adapted for emitting a pump radiation at a wavelength $\lambda_p$, characterized in that said optical fiber comprises a tellurite glass suitable for enhancing Raman effect, said glass comprising:

from 50% to 90%, preferably from 65% to 85%, in mole percentage of $TeO_2$;
from 5% to 45%, preferably from 5% to 30%, more preferably from 10% to 25% in mole percentage of a first metal oxide of an element selected from the group consisting of : Nb, W, Ti;
from 5% to 30%, preferably from 5% to 20% in mole percentage of a second different metal oxide of an element selected from the group consisting of : Nb, W, Ti.

More preferably said oxide is a niobium or tungsten oxide.

According to a particularly preferred embodiment, said tellurite glass comprises from 50% to 90% in mole percentage of $TeO_2$, from 5% to 30% of niobium oxide and from 5% to 30% of tungsten oxide. According to claim 11 the Raman amplifiers of the invention comprises a glass which is substantially free of erbium.

A still further aspect of the invention, as defined in claim 12, relates to an optical telecommunication link including a optical fiber path for transmitting an optical signal and at least a Raman amplifier as above defined, optically coupled along said optical fiber path.

According to another aspect, as defined in claim 13, the present invention relates to an optical fiber for Raman amplification comprising a glass composition which comprises:

from 50% to 90% in mole percentage of $TeO_2$;
from 5% to 45% in mole percentage of a first metal oxide of an element selected from the group consisting of : Nb, W, Ti;
from 5% to 30% in mole percentage of a second different metal oxide of an element selected from the group consisting of : Nb, W, Ti;
said composition being substantially free of erbium.

More preferably said oxide is a niobium or tungsten oxide.

According to a particularly preferred embodiment, said glass composition comprises from 50% to 90% in mole percentage of $TeO_2$, from 5% to 30% of niobium oxide and from 5% to 30% of tungsten oxide.

Preferably said tellurite glass shows a maximum Raman gain higher than 100 times, preferably higher than 120 times with respect to pure silica glass.

Preferably, the total cross-section of the Raman emission spectrum of said tellurite glass in the frequency shift range of from 200 cm$^{-1}$ to 1080 cm$^{-1}$ is at least 100 times greater with respect to the total cross-section of the Raman emission of pure silica in the same frequency shift range, more preferably at least 120 times greater, much more preferably 150 times greater.

Preferably said glass composition has a thermal stability index Tx-Tg higher than 125°C, more preferably higher than 150°C, even more preferably higher than 160°C.

According to a preferred aspect, said optical fiber comprises a core portion and a cladding portion, said core portion being made from a glass composition as above defined.

A still further aspect of the present invention, as defined in claim 22, relates to a method for increasing at least one of the parameters selected among Raman bandwidth broadening and thermal stability of an optical fibre comprising binary glass composition including tellurium oxide and a first metal oxide of an element selected among Nb, W, Ti which comprises preparing an at least ternary glass composition comprising said tellurium oxide, said first metal oxide and a second different metal oxide of an element selected among Nb, W, Ti and drawing an optical fiber comprising said at least ternary glass composition, the method comprising the step of controlling the amount of erbium so as it is lower than 100ppm.

**Brief description of the drawings**

Figure 1 schematically shows an embodiment of a Raman amplifier according to the invention;
Figure 2 shows an illustrative example of a Raman spectrum of a tellurite glass composition;
Fig. 3 shows a ternary diagram of a tellurite glass composition;
Figure 4 shows the Differential scanning calorimetry diagram of three tellurite glass compositions;
Figure 5 shows the Raman spectra of the same three tellurite glass compositions.

**Description of the invention**

As mentioned above, in the effort of providing glass compositions particularly suitable for the Raman amplification, the applicant has found that a tellurite glass comprising at least two different metal oxides can be advantageously used. In particular, said glass comprises:

from 50% to 90%, preferably from 65% to 85%, in mole percentage of $TeO_2$;
from 5% to 45%, preferably from 5% to 30%, more preferably from 10% to 25% in mole percentage of a first metal oxide of an element selected from the group consisting of : Nb, W, Ti;
from 5% to 30%, preferably from 5% to 20% in mole percentage of a second different metal oxide of an element selected from the group consisting of : Nb, W, Ti.

In addition, the applicant has further found that a tellurite glass comprising:

from 55% to 95%, preferably from 65% to 95%, in mole percentage of $TeO_2$;
from 5% to 45%, preferably from 5% to 35% in mole percentage of a metal oxide of an element selected from the group consisting of : Nb, Ti;
shows a relevant Raman gain, both in terms of peak intensity and of total Raman cross-section.

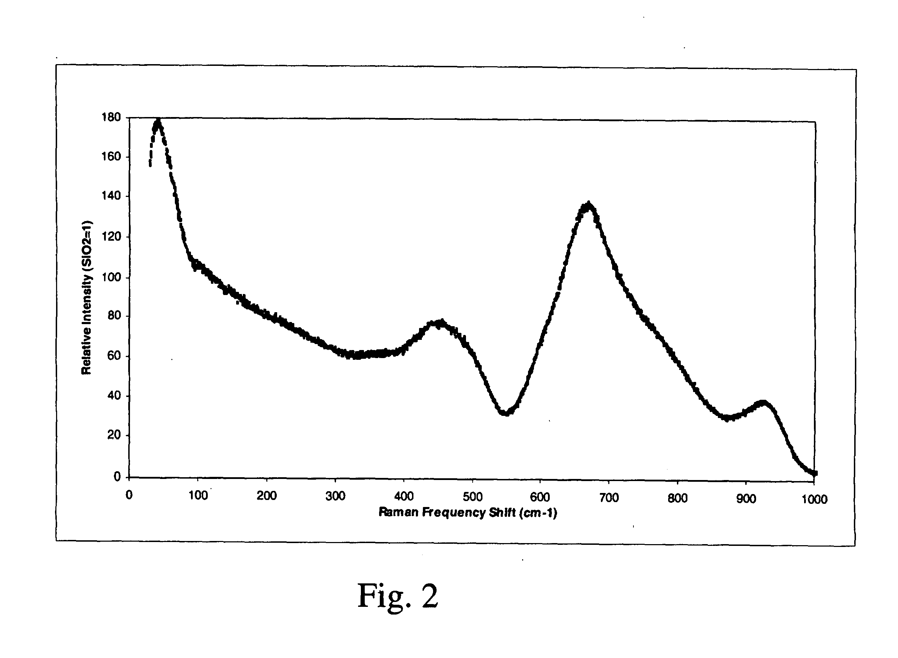

Fig. 2 shows an illustrative example of Raman spectrum of a glass composition for a fibre according to the invention.
Raman emission measurement has been performed on polished thin slabs of about 1 mm thickness and carried out in backscattering geometry, by using two different linearly polarized laser sources (a frequency doubled Nd:YAG laser operating at 532 nm, and a He-Ne laser operating at 633 nm). Details of the measurement methodology are given in the experimental part.
In order to make a quantitative analysis, the obtained Raman spectrum needs however to be corrected, due to the reduction of the solid angle of light collection and the reduction of the transmitted and collected power which occur at the air/glass interface. These corrections result into a multiplication factor:

$$F = \frac{(1+n_s)^4}{(1+n_{Si})^4} \qquad (1)$$

where $n_s$ and $n_{si}$ are the refraction index of the tellurite glass sample and of the silica glass reference, respectively, at the pump or signal wavelength. The index of refraction in the transparency region has been measured using an ellipsometer from 500 nm up to about 1700 nm. A well-polished, ultra-pure silica sample has been employed as a reference.
The correction factor F has been found to be substantially constant (variation of less than 1%) for the whole frequency range of Raman spectra.
The Raman gain of the tellurite glass with respect to pure silica at each frequency (i.e. the relative corrected intensity emission) can be determined by the following:

$$I_{corr} = F \cdot I/I_{Si} \qquad (2)$$

where I is the intensity of Raman emission of the tellurite glass measured at a said frequency and $I_{si}$ is the maximum

intensity of Raman emission of the reference silica glass, which occurs at the frequency of about 440 cm$^{-1}$. The Raman emission spectrum of the tellurite glass, corrected with respect to the Raman emission spectrum of pure silica, is obtained by plotting the calculated values of the $I_{corr}$ parameter over the measured frequency range. The maximum Raman gain of a tellurite glass ($I_{max}$) with respect to silica glass is the gain $I_{corr}$ measured in correspondence with the frequency of the maximum Raman emission peak of the tellurite glass (generally occurring at about 650-680 cm$^{-1}$ for the tellurite glasses of the invention).

The total cross-section $\sigma_t$ of the spectrum of the tellurite glass is obtained by integrating the raw spectrum I over the frequency range 200 cm$^{-1}$ 1080 cm$^{-1}$. Then the relative total corrected cross-section $\sigma_{corr}$ (i.e. the relative cross-section of the tellurite glass with respect to the cross-section of pure silica, $\sigma_{Si}$) is calculated by:

$$\sigma_{corr} = F \, \sigma_t / \sigma_{Si} \qquad (3)$$

Thus, for instance, a value of $\sigma_{corr}$ of 100 indicates that the total cross-section of the Raman emission spectrum of the tellurite glass is one hundred times greater than the total cross-section of the Raman emission of pure silica, in the same frequency range.

The Raman emission of a tellurite glass according to the invention shows a maximum in correspondence with at least one frequency shift. In the illustrative Raman spectrum of Fig. 2, three emission peaks can be observed, with respective maximums at about 450 cm$^{-1}$, about 660 cm$^{-1}$ and about 920 cm$^{-1}$. However, not only the maximum intensity of the peak is important for an effective Raman amplification, but also its relative broadness. Since the $\sigma_{corr}$ is proportional to both the intensity of the Raman peaks and broadness of the bandwidth, it is apparent that, for a given peak intensity, a larger $\sigma_{corr}$ results into a broader Raman emission spectrum. In addition, the same value $\sigma_{corr}$ can be referred to a Raman emission showing either a very high or a relatively low peak intensity; in the first case, the bandwidth will be relatively narrow, although very intense; in the second case, the bandwidth will be comparatively broader. This second case, provided the intensity of the peak is sufficiently high, is generally preferred for amplification application. Therefore, the bandwidth broadening parameter $\sigma_{corr}/I_{max}$ may give an indication of the Raman bandwidth broadening effect of a glass. Typically a value of about 1.00 or higher of this parameter is preferable.

A Raman amplifier according to the invention comprises an optical fiber which comprises a tellurite glass preferably having a maximum Raman gain $I_{max}$ higher than 100 times the maximum Raman gain of pure silica, more preferably higher than about 120 times.

Furthermore, the total cross-section of the Raman spectrum $\sigma_{corr}$ of said tellurite glass is preferably greater than 100 times, more preferably greater than 120 times than the total cross section of pure silica, in the frequency measurement range of from 200 cm$^{-1}$ to 1080 cm$^{-1}$. Much more preferably, said total cross-section of the Raman spectrum is about 150 times greater than the total cross section of pure silica, particularly when said tellurite glass comprises at least two different additional metal oxides.

As the bandwidth broadening parameter $\sigma_{corr}/I_{max}$ of these glass compositions is generally close to 1.00, they result particularly suitable for manufacturing an optical fiber for Raman amplification.

According to a preferred aspect of the invention, a glass composition comprising a tellurium oxide and at least two different metal oxides is preferably used. In particular, said composition may comprise:

from 50% to 90% in mole percentage of TeO$_2$;
from 5% to 45% in mole percentage of a first metal oxide of an element selected from the group consisting of : Nb, W, Ti;
from 5% to 30% in mole percentage of a second different metal oxide of an element selected from the group consisting of : Nb, W, Ti.

It has in fact been observed that the simultaneous presence of at least two different metal oxides results in glass composition with good optical and thermal properties.

As the glass composition is used in an optical fiber for Raman amplification, the presence of active rare earth elements (e.g. erbium) is not necessary. On the contrary as erbium has a strong detrimental effect on the attenuation, the present glass compositions are preferably substantially free of erbium. Substantially free, means that the amount of erbium in the glass composition is lower than 100 ppm.

Of course, a composition according to the invention may contain further metal oxides in addition to said first and second metal oxides, said further metal oxides being selected among those previously illustrated.

In addition, further metal oxides can be added to the metal composition, in order to tailor the core/clad properties of the optical fiber, such as refractive index, thermal expansion coefficient and viscosity. For instance, said oxide can be an oxide of a metal selected from the group consisting of Y, Sc, Al, Ga, Ge, P, Li, Na, K, Rb, Cs, Mg, Ca, Sr, Be, B, Zn. Typically, amounts of less than 30% in mole percentage of said oxides are added to the glass composition. For particular metal oxides which may negatively affect the Raman emission of the glass (e.g. lithium oxide), the molar amount is preferably lower than 5%. For example, a typical glass composition may contain:

from 50% to 90% in mole percentage of $TeO_2$;
from 5% to 30%, of a first oxide of an element selected from the group consisting of: Nb, W, Ti;
from 5% to 30% of a second different oxide of an element selected from the group consisting of Nb, W, Ti
and optionally from 0.1% to 10% in mole percentage of a metal oxide where the metal is selected from the group consisting of Y, Sc, Al, Ga, Ge, P, Li, Na, K, Rb, Cs, Mg, Ca, Sr, Be, B, Zn.

As observed by the Applicant, the addition of at least a second metal oxide to a binary mixture of tellurite and of a first metal oxide, in order to obtain (at least) a ternary mixture of said oxides, may determine a broadening of the Raman emission bandwidth, thus rendering an optical fiber made from said glass composition particularly suitable for being used in a Raman amplifier.

In those instances where the addition of said second heavy metal oxide results in negligible variations of the emission bandwidth, the applicant has observed that said second oxide is nevertheless capable of increasing the thermal stability index (Tx-Tg) of the glass.

The thermal stability index is the temperature interval between a temperature Tx and the glass transition temperature (Tg). As used here, Tx represents the temperature at the onset of crystal formation, as determined by means of Differential Scanning Calorimetry (DSC) analysis, with a heating rate of 10°C/min. Any development of crystals in the glass can be detrimental because of attenuation caused by light scattering on the crystals, and should thus be avoided.

For drawing of fibers, the thermal stability index value of a glass should thus be as high as is compatible with other properties. A value of at least 100°C is deemed necessary, while a value in excess of 120° C is preferred. Such an index value, in view of the steepness of the viscosity curve for these glasses, is sufficient to permit the glass to be drawn into an optical fiber in a practical manner, for example, by redrawing "rod-in-tube" preforms.

Furthermore, if the thermal stability index is still higher, e.g. 150°C or more, preferably 160°C or more (e.g. about 175°C), it is possible to produce preforms of relatively large diameter, e.g. up to about 2 cm or even more. As a matter of fact, the higher thermal stability index of the glass will allow the inner portion of the preform to reach the desired fiber drawing temperature, while avoiding the outer portion being subjected to detrimental high temperatures, close to the crystallization temperature.

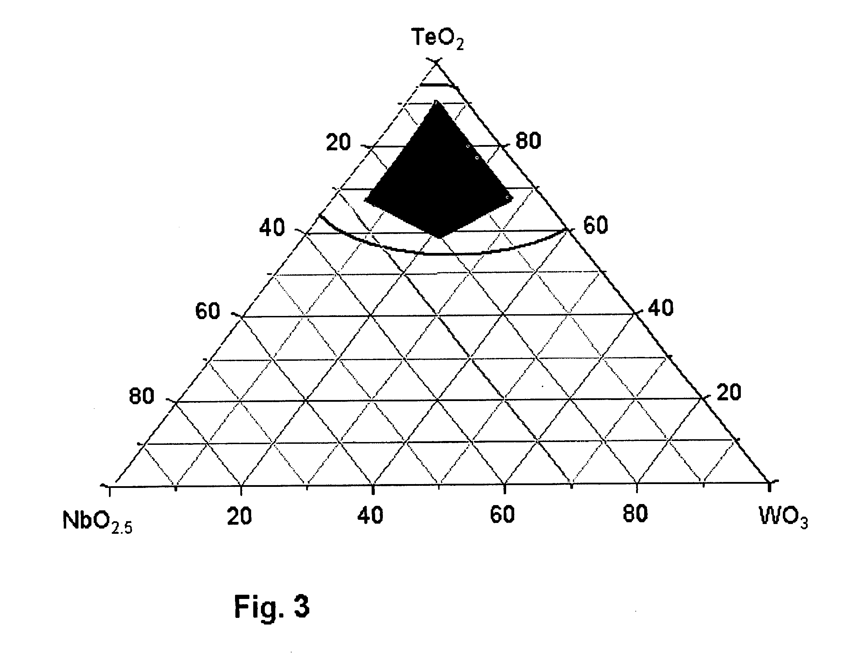

According to a preferred embodiment, a tellurite glass composition according to the invention comprises at least a tungsten oxide or a niobium oxide. As a matter of fact, the presence of each of these two oxides in a (at least) ternary tellurite glass composition allows to obtain compositions with particularly valuable properties in terms of Raman optical properties and of thermal stability. Examples of suitable ternary compositions are tellurite glasses comprising niobium and tungsten oxides (TNW glasses) and tellurite glasses comprising niobium and titanium oxides (TNT glasses). Particularly preferred are those tellurite glass compositions comprising both the above heavy metal oxides. It has in fact been observed that the combination of these two oxides into a tellurite based glass surprisingly results in a thermally very stable glass composition with good optical properties. Preferably, the amount of Nb oxide is from about 5% to about 30% in moles of the total composition. The amount of W oxide is preferably from about 5% to 30% in moles. Fig. 3 shows a ternary diagram of a TNW glass composition. The darkened region of said diagram indicates the preferred TNW compositions obtainable with the respective relative amounts of each of said oxides.

The glass compositions according to the invention can be prepared according to conventional melting techniques, which include admixing the raw materials, charging the mixture into a Pt/Au or Au crucible, melting the glass at a temperature between 750°C and 950°C under the atmosphere of $O_2$ and $O_2/N_2$, then casting the homogeneous melt into a preheated brass mould for forming a glass bulk or perform.

The cladding and over-cladding tube can be made by rotational-casting and drilling of a glass cylinder obtained as above described.

Tellurite glass fiber according to the invention, with a conventional core/cladding structure, can be fabricated, for instance, by well-known rod-in-tube methods, by collapsing said tube onto said rod, thus forming a preform which is drawn into an optical fiber.

A core preform and a cladding tube as above described can be used. The core glass is based for instance on $TeO_2$-$NbO_{2.5}$-$WO_3$ glasses while the cladding is made from the same material added with and amount of less than about 5 mol% (e.g. about 3%) of a further metal oxide, e.g. $Al_2O_3$ or $La_2O_3$, for lowering the refractive index. A fiber loss around 1 dB/m or less can be obtained by employing commercially raw materials with high purity of (e.g. 99,999% or higher).

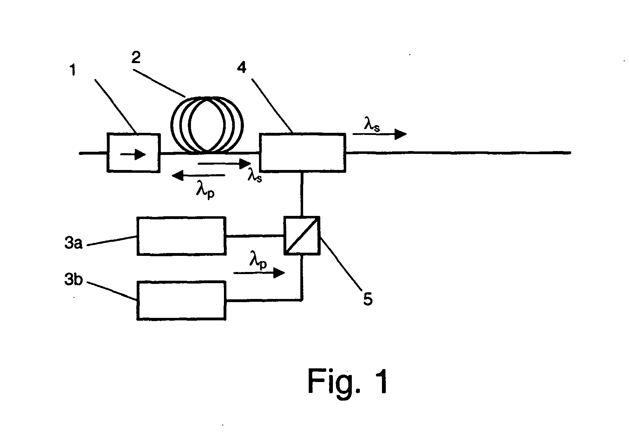

An optical fiber according to the invention can be used for Raman amplification, for instance in Raman amplifier as illustrated in fig. 1.

Figure 1 shows an embodiment of a Raman amplifier according to the invention. The Raman amplifier comprises an optical fiber 2 according to the invention and at least one pump laser 3a, optically connected to one end of the fiber 2, for example through a WDM coupler 4.

In the exemplary preferred embodiment shown in Fig. 1 two pump lasers 3a, 3b are provided, adapted for emitting polarized pump radiation at a wavelength $\lambda_p$ and having substantially the same power emission. The two pump radiations are coupled together through a polarization beam splitter 5 so that orthogonal polarization states are sent downstream of the polarization beam splitter 5. The polarization beam splitter 5 is connected to one end of the WDM coupler 4. Another end of the WDM coupler 4 is adapted to receive an optical signal at a wavelength $\lambda_s$ to be amplified. An optical isolator 1 is preferably provided before optical fiber 2. A third end of the WDM coupler 4 is connected to the fiber 2. The optical connection of WDM coupler 4 to the fiber 2 may comprise a corrective optics, for instance focusing lenses, in order to optimize the coupling of the optical radiation in the fiber 2. In the configuration shown in Fig.1, the optical signal and the pump radiation are counter-propagating in the fiber 2. An alternative embodiment may provide co-propagation between optical signal and pump radiation. A further alternative embodiment may provide both co- and counter-propagating pump radiation with respect to the optical signal. In other embodiments, not shown, plural pump sources having different emission wavelengths may be provided. The Raman amplifier according to the invention may be a single stage amplifier, or a multi-stage amplifier, or may be a part of a multi-stage amplifier. Further, the Raman amplifier according to the invention may be combined with other types of amplifiers, such as for example erbium doped fiber amplifiers or semiconductor amplifiers.

The optical signal may have a wavelength $\lambda_s$ comprised between about 1460 nm and 1650 nm, preferably between about 1525 nm and 1625 nm. The radiation emitted by the pump lasers 3a, 3b is related to the signal radiation wavelengths: in order to have Raman amplification, the wavelength of the pump lasers should be shifted with respect to the signal radiation wavelengths in a lower wavelength region of the spectrum, such shift being equal to the Raman shift (see G.P. Agrawal, "Nonlinear Fiber Optics", Academic Press Inc. (1995), pag.317-319) of the material comprised in the core of the fiber 2 for at least one signal radiation wavelength.

The Raman amplifier according to the invention may be part of an optical transmission system, advantageously a WDM transmission system, comprising a transmitting station, a receiving station and an optical line connecting said transmitting station and said receiving station. The transmitting station comprises at least one transmitter adapted to emit the optical signal carrying an information. For a WDM transmission, the transmitting station comprises a plurality of transmitters adapted to emit a respective plurality of optical channels, each having a respective wavelength and a multiplexing unit to combine the optical channels into a common output. In this case, the optical signal is a WDM optical signal, comprising different optical channels. The receiving station comprises at least one receiver adapted to receive said optical signal and discriminate said information. For a WDM transmission, the receiving station comprises a plurality of receivers adapted to receive the WDM optical signal and discriminate the information carried by each optical channel received and a splitting unit (preferably wavelength selective, such as a demultiplexer) to deliver to the receivers the WDM optical signals reaching the receiving unit. The optical line comprises at least one transmission optical fiber. At least one amplifier, comprising at least one Raman amplifier according to the invention, is provided along the optical line in order to counteract attenuation introduced on the optical signal by at least a portion of said transmission optical fiber or fibers. Other sources of attenuation can be connectors, couplers/splitters and various devices, such as for example modulators, switches, add-drop multiplexers and so on, disposed along the optical line. The optical transmission system comprising at least one Raman amplifier according to the invention can be any kind of optical transmission system, such as for example a terrestrial transmission system, e.g. for long haul, metropolitan or access networks, or a submarine transmission system. The transmission system may also comprise other types of amplifiers, such as for example erbium doped fiber amplifiers or semiconductor amplifiers, in combination with at least one Raman amplifier according to the invention.

The following examples are provided for better illustrating the invention.

**EXAMPLES**

**Example 1**

**Preparation of glass compositions**

Glass compositions have been prepared by conventional melting techniques, by admixing the raw oxide materials in the prescribed molar amounts and charging the mixture in a Pt/Au crucible. A batch of about 50g of each composition was melted in an electric furnace at temperature between 750 °C and 950 °C for 2 hours under the atmosphere of $O_2/N_2$. Then the homogeneous melt was casted into a preheated brass mould for forming a glass bulk or perform. The glass was annealed below Tg for 4 hours.

The following table 1 shows the compositions which have been prepared, where the amount of each oxide is expressed as molar percentage over the total composition.

### Table 1: Glass compositions

|      | TeO$_2$ | NbO$_{2.5}$ | WO$_3$ | TiO$_2$ |
|------|------|------|------|------|
| **TN10** | 90 | 10 | | |
| **TN20** | 80 | 20 | | |
| **TN30** | 70 | 30 | | |
| **TW10** | 90 | | 10 | |
| **TW20** | 80 | | 20 | |
| **TW30** | 70 | | 30 | |
| **TT5** | 95 | | | 5 |
| **TT10** | 90 | | | 10 |
| **TT15** | 85 | | | 15 |
| **TNW** | 72 | 18 | 10 | |
| **TNT** | 72 | 18 | | 10 |

A comparative glass composition (TZLB) comprising TeO$_2$, ZnO, LiO$_2$ and Bi$_2$O$_3$ in the respective percentage molar amount of 78%, 5%, 12% and 5% has also been prepared, in accordance with the compositions disclosed by the above cited JP patent application Publication No. 2001-109026.

## Example 2

### Thermal stability of glass compositions

The above glass compositions have been subjected to DSC analysis, in order to determine the Tg and Tx of each composition, and thus the respective thermal stability index Tx-Tg.

For each glass composition, three bulk glass samples of around 20 mg were subjected to a DSC characterisation at a heating rate of 10*C/min in N$_2$ gas atmosphere. The measurement was performed using a DSC series Q10 apparatus (TA Instruments, U.S.A.).

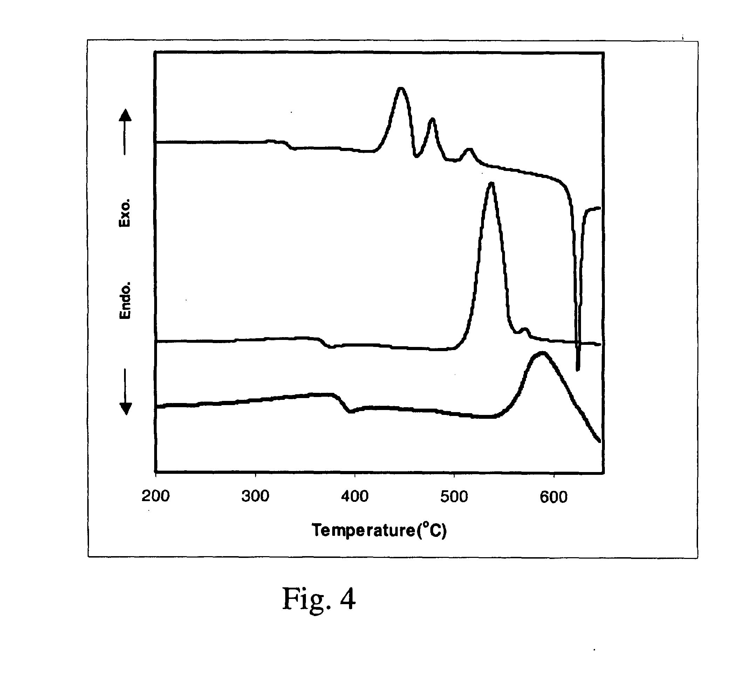

Fig. 4 shows an example of a DSC plot of the following glass compositions: TNW, TN20 and TW10. The respective Tg and Tx values derivable from said plot, corresponding to the endothermic and to the (first) exothermic peak, respectively, are reported in the following table 2, together with the Tg and Tx values of the other glass compositions manufactured according to example 1. Table 2 further shows the relative Tx-Tg thermal stability index of said glass compositions.

### Table 2: Thermal stability

|      | Tg(°C) | Tx (°C) | $(T_x-T_g)$ |
|------|------|------|------|
| **TN10** | 326 | 432 | 106 |
| **TN20** | 362 | 515 | 153 |
| **TN30** | 398 | 523 | 125 |
| **TW10** | 329 | 428 | 99 |
| **TW20** | 349 | 497 | 148 |
| **TW30** | 368 | 521 | 153 |
| **TT5** | 321 | 393 | 72 |
| **TT10** | 341 | 439 | 98 |
| **TT15** | 364 | 450 | 86 |
| **TNW** | 380 | 555 | 175 |

Table continued

|  | Tg(°C) | Tx (°C) | $(T_x-T_g)$ |
|---|---|---|---|
| **TNT** | 405 | 535 | 130 |

From the results of table 2, it may be appreciated the positive influence of the second heavy metal oxide on the thermal stability of the glass composition. In particular, the ternary composition TNW shows an increased thermal stability index with respect to the corresponding binary mixtures TN and TW. The TNT ternary glass composition also shows an increased thermal stability with respect to the binary TT compositions and a generally comparable thermal stability with respect to the binary TN compositions.

**Example 3**

**Optical properties of glass compositions**

Raman measurements have been performed on polished thin slabs of the above glass compositions of about 1 mm thickness.

A confocal microscope optics has been used in order to focus well inside the sample, and in order to collect the scattered light from the same region. For this purpose, the same microscope optics were used both for the incident laser beam and for the collection of the Raman scattered light. The measurements have therefore been carried out in a backscattering geometry.

The Raman scattered light was analysed with a spectrometer and detected by a cooled CCD detector.

Two different linearly polarized laser sources were used, a frequency doubled Nd:YAG laser operating at 532 nm. As the green light of the 532 nm pump is relatively close to the absorption gap of the tellurite glasses, resonant Raman contribution could appear in the measured Raman spectrum. In order to check these contributions, the measured differential Raman scattering cross-section have been compared by using the green pump (at 532 nm) and He-Ne laser operating at 633 nm red pump (at 633 nm). Taking into account the $\lambda_{pump}^{-4}$ dependence of the Raman scattering cross-section, and always normalizing the measurement with respect to the silica reference, the two spectra were always overlapping to within a few percent. This indicates absence of any resonance contributions when the green pump is used.

The system for the Raman measurements was composed as follows:

- an Olympus (JP) model BX40 confocal microscope with a 50x (aperture 0.45) objective;
- a Jobin-Yvon (France) T64000 triple grating spectrometer with three holographic gratings with 1800 lines per mm to disperse and recombine light, achieving a spectral resolution of about 3cm-1;
- a I.S.A. ASTROMED liquid nitrogen cooled camera detection system, which relies on a frontally illuminated Charge Coupled Device. The excitation source is provided by the 532 nm line of a frequency doubled Nd:YAG Coherent DPSS 532 laser, or by a standard He-Ne laser for 633 nm.

In order to make a quantitative analysis, the Raman spectrum of each glass composition obtained with the above pump at 532 nm has been corrected as previously explained, in order to obtain the respective values of $\sigma_{corr}$ and $I_{corr}$.

In order to effectively evaluate both the maximum intensity and the broadness of the emission spectrum of each glass composition the previously discussed broadening parameter ($\sigma_{corr}/I_{max}$) has been used as an indicator of the bandwidth broadening of a glass.

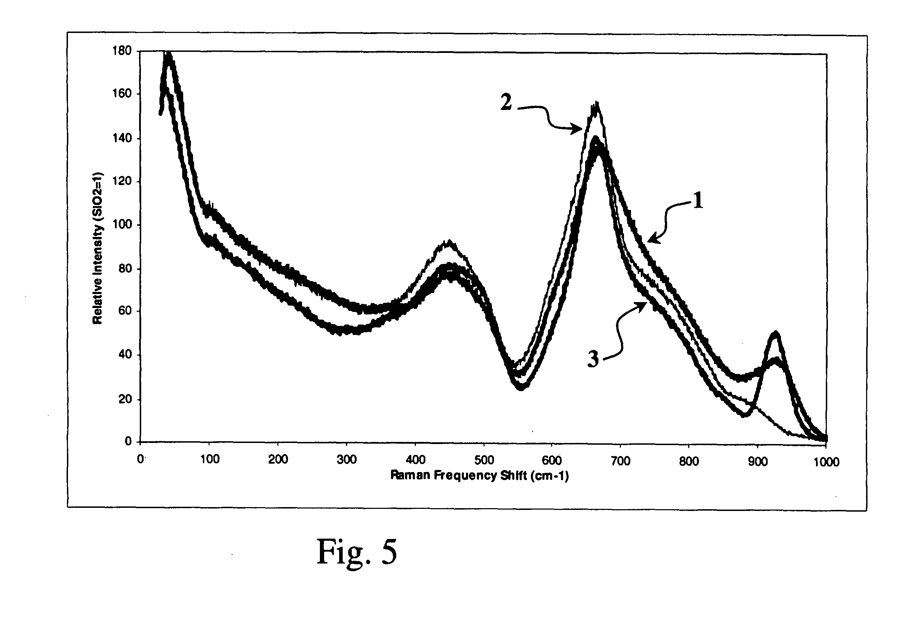

Fig. 5 shows the overlapped Raman spectra of the following glass compositions: TNW (Iline 1), TN20 (line 2) and TW10 (line 3).

The following table 3 shows:

- the corrected peak Raman intensity **($I_{corr}$)**;
- the corrected total differential Raman cross-section **($\sigma_{corr}$)** relative to $SiO_2$ glass; and
- the broadening parameter **($\sigma_{corr}/I_{max}$)** for the glass compositions of Example 1.

In the $I_{corr}$ column, the higher value given for each glass composition corresponds to the respective maximum gain $I_{max}$.

Table 3 also contains the respective values of the reference silica sample.

**Table 3: Optical properties of glass compositions**

| Glass system | n (532 nm) | Correction factor F | $\Delta\nu$ peak (cm$^{-1}$) | Icorr | $\sigma_{corr}$ | $\sigma_{corr}/I_{max}$ |
|---|---|---|---|---|---|---|
| **Silica** | 1.4607 | 1 | 440 | **1** | **1** | **1** |
| | | | | | | |
| | | | | | | |
| **TN10** | 2.2135 | 2.91 | 451 | **87** | | |
| | | | 663 | **152** | **137** | **0.90** |
| **TN20** | 2.2030 | 2.87 | 451 | **89** | | |
| | | | 663 | **155** | **157** | **1.01** |
| **TN30** | 2.2163 | 2.92 | 450 | **82** | | |
| | | | 664 | **141** | **157** | **1.11** |
| | | | | | | |
| **TW10** | 2.2113 | 2.9 | 460 | **82** | | |
| | | | 663 | **142** | **143** | **1.01** |
| | | | 925 | **51** | | |
| **TW20** | 2.2153 | 2.92 | 468 | **79** | | |
| | | | 675 | **137** | **163** | **1.19** |
| | | | 925 | **85** | | |
| **TW30** | 2.2186 | 2.93 | 473 | **71** | | |
| | | | 684 | **137** | **179** | **1.31** |
| | | | 928 | **111** | | |
| | | | | | | |
| **TT5** | 2.211 | 2.90 | 452 | **96** | | |
| | | | 657 | **156** | **132** | **0.85** |
| **TT10** | 2.2211 | 2.94 | 452 | **102** | | |
| | | | 657 | **146** | **140** | **0.96** |
| **TT15** | 2.2256 | 2.95 | 453 | **110** | | |
| | | | 655 | **140** | **148** | **1.06** |
| | | | | | | |
| **TNW** | 2.2116 | 2.90 | 455 | **77** | | |
| | | | 670 | **137** | **161** | **1.18** |
| | | | 922 | **39** | | |
| | | | | | | |
| **TNT** | 2.2233 | 2.94 | 450 | **97** | | |
| | | | 654 | **138** | **162** | **1.17** |
| | | | | | | |
| **TZLB** | 2.1 | 2.52 | 435 | **49** | | |
| | | | 670 | **69** | | |
| | | | 751 | **74** | **81** | **1.09** |

As shown by the above table, both the maximum peak intensity and the total cross-sectional area of the Raman spectrum of tellurite glasses according to the invention are higher than 100 and comparatively higher with respect to the same parameters of the known TZLB glass compositions.

In particular, as shown by the above table 3 and by fig. 5, the ternary TNW composition combines the advantages of a high peak intensity and of a significant broadening which are particularly preferred for Raman applications. As mentioned before, this ternary glass also shows very good thermal stability. While this composition shows a slight decrease of the peak intensities as compared to the parent binary compositions TN20 and TW10, its corrected total differential Raman cross-section $\sigma_{corr}$ is larger. By comparing the broadening parameter $\sigma_{corr}/I_{max}$ of the TNW composition with those of its parent TN20 and TW10 compositions, those skilled in the art may appreciate the increased bandwidth broadening obtainable with said glass composition.

The broadening effect of a ternary mixture can also be appreciated for the TNT ternary system. This composition shows in fact a $\sigma_{corr}/I_{max}$ of 1.17 (comparable to the TNW value), much higher than the $\sigma_{corr}/I_{max}$ values of the corresponding TT10 and TW10 parent binary compositions.

**Claims**

1. Raman amplifier comprising at least one optical fiber (2) and at least one pump laser (3a), optically coupled to said optical fiber, said pump laser being adapted for emitting a pump radiation at a wavelength $\lambda_p$, wherein said optical fiber (2) comprises a tellurite glass suitable for enhancing Raman effect, said glass comprising:

   from 50% to 90% in mole percentage of $TeO_2$,
   **characterized in that** said glass further comprises:
   from 5% to 45% in mole percentage of a first metal oxide of an element selected from the group consisting of: Nb, W and Ti; and
   from 5% to 30% in mole percentage of a second different metal oxide of an element selected from the group consisting of: Nb, W and Ti.

2. Raman amplifier according to claim 1, wherein the mole percentage of $TeO_2$ in said glass is from 65% to 85%.

3. Raman amplifier according to claim 1 or 2, wherein the mole percentage of said first metal oxide is from 5% to 30%.

4. Raman amplifier according to claim 1 or 2, wherein the mole percentage of said first metal oxide is from 10% to 25%.

5. Raman amplifier according to any of the above claims, wherein the mole percentage of said second metal oxide is from 5% to 20%.

6. Raman amplifier according to any of the above claims, wherein said tellurite glass further comprises an oxide of a metal selected from the group consisting of Y, Sc, Al, Ga, Ge, P, Li, Na, K, Rb, Cs, Mg, Ca, Sr, Be, B, Zn.

7. Raman amplifier according to any of the above claims, wherein the glass comprises at least a niobium oxide.

8. Raman amplifier according to claim 7, wherein the glass comprises a tungsten oxide and a niobium oxide.

9. Raman amplifier according to claim 7, wherein the glass comprises a niobium oxide and a titanium oxide.

10. Raman amplifier according to claim 1, wherein said tellurite glass comprises from 50% to 90% in mole percentage of $TeO_2$, from 5% to 30% in mole percentage of niobium oxide and from 5% to 30% in mole percentage of tungsten oxide.

11. Raman amplifier according to any of the above claims, wherein said glass is substantially free of erbium.

12. Optical telecommunication link including an optical fiber path for transmitting an optical signal and at least a Raman amplifier as defined according to any of the preceding claims, optically coupled along said optical fiber path.

13. Use for Raman amplification of an optical fiber comprising a glass composition which comprises:

   from 50% to 90% in mole percentage of $TeO_2$;

**characterized in that** said glass composition further comprises:

from 5% to 45% in mole percentage of a first metal oxide of an element selected from the group consisting of: Nb, W, and Ti; and

from 5% to 30% in mole percentage of a second different metal oxide of an element selected from the group consisting of: Nb, W and Ti.

14. Use for Raman amplification of an optical fiber according to claim 13, wherein the mole percentage of TeO$_2$ in said glass composition is from 65% to 85%.

15. Use for Raman amplification of an optical fiber according to claim 13 or 14, wherein the mole percentage of said first metal oxide is from 5% to 30%.

16. Use for Raman amplification of an optical fiber according to any of claims 13 to 14, wherein the mole percentage of said second metal oxide is from 5% to 20%.

17. Use for Raman amplification of an optical fiber according to any of claims 13 to 16, wherein said glass composition further comprises an oxide of a metal selected from the group consisting of Y, Sc, Al, Ga, Ge, P, Li, Na, K, Rb, Cs, Mg, Ca, Sr, Be, B, Zn.

18. Use for Raman amplification of an optical fiber according to any of claims 13 to 17, wherein the glass composition comprises at least a niobium oxide.

19. Use for Raman amplification of an optical fiber according to claim 18, wherein the glass composition comprises a tungsten oxide and a niobium oxide.

20. Use for Raman amplification of an optical fiber according to claim 18, wherein the glass composition comprises a niobium oxide and a titanium oxide.

21. Use of an optical fiber for Raman amplification according to any of the preceding claims 13 to 20, wherein said optical fiber comprises a core portion and a cladding portion, wherein at least said core portion is made from a glass composition as defined in any of said claims 13 to 20.

22. Method for increasing at least one of the parameters selected among Raman bandwidth broadening and thermal stability of an optical fiber comprising a binary glass composition including tellurium oxide and a first metal oxide of an element selected among Nb, W, Ti, which comprises preparing an at least ternary glass composition comprising said tellurium oxide, said first metal oxide and a predetermined amount of a second different metal oxide of an element selected among Nb, W, Ti and drawing an optical fiber comprising said at least ternary glass composition, the method comprising the step of controlling the amount of erbium so as it is lower than 100 ppm.

**Patentansprüche**

1. Raman-Verstärker, der mindestens eine optische Faser (2) und mindestens einen Pumplaser (3a), der an die optische Faser gekoppelt ist, umfasst, wobei der Pumplaser angepasst ist für die Emission einer Pumpstrahlung bei der Wellenlänge $\lambda_p$, wobei die optische Faser (2) ein Telluritglas umfasst, das geeignet ist für die Verstärkung des Raman-Effekts, wobei dieses Glas umfasst:

50 bis 90 mol-% TeO$_2$,
**dadurch gekennzeichnet, dass** das Glas weiter umfasst:
5 bis 45 mol-% eines ersten Metalloxids eines Elements, ausgewählt aus der Gruppe bestehend aus Nb, W und Ti; und
5 bis 30 mol-% eines zweiten anderen Metalloxids eines Elements, ausgewählt aus der Gruppe bestehend aus Nb, W und Ti.

2. Raman-Verstärker gemäss Anspruch 1, in dem der Molprozentsatz von TeO$_2$ in dem Glas 65 bis 85 % ist.

3. Raman-Verstärker gemäss Anspruch 1 oder 2, in dem der Molprozentsatz des ersten Metalloxids 5 bis 30 % ist.

**4.** Raman-Verstärker gemäss Anspruch 1 oder 2, in dem der Molprozentsatz des ersten Metalloxids 10 bis 25 % ist.

**5.** Raman-Verstärker gemäss mindestens einem der obigen Ansprüche, in dem der Molprozentsatz des zweiten Metalloxids 5 bis 20 % ist.

**6.** Raman-Verstärker gemäss mindestens einem der obigen Ansprüche, in dem das Telluritglas ferner ein Oxid eines Metalls umfasst, das ausgewählt ist aus der Gruppe bestehend aus Y, Sc, Al, Ga, Ge, P, Li, Na, K, Rb, Cs, Mg, Ca, Sr, Be, B, Zn.

**7.** Raman-Verstärker gemäss mindestens einem der obigen Ansprüche, in dem das Glas zumindest ein Nioboxid umfasst.

**8.** Raman-Verstärker gemäss Anspruch 7, in dem das Glas ein Wolframoxid und ein Nioboxid umfasst.

**9.** Raman-Verstärker gemäss Anspruch 7, in dem das Glas ein Nioboxid und ein Titanoxid umfasst.

**10.** Raman-Verstärker gemäss Anspruch 1, in dem das Telluritglas 5 bis 90 mol-% $TeO_2$, 5 bis 30 mol-% Nioboxid und 5 bis 30 mol-% Wolframoxid umfasst.

**11.** Raman-Verstärker gemäss mindestens einem der obigen Ansprüche, in dem das Glas im wesentlichen frei von Erbium ist.

**12.** Optische Telekommunikationsverknüpfung, die eine optische Faserstrecke für die Übertragung eines optischen Signals und mindestens einen Raman-Verstärker wie in mindestens einem der vorhergehenden Ansprüche definiert, optisch entlang der optischen Faserstrecke gekoppelt einschliesst.

**13.** Verwendung einer optischen Faser für die Raman-Verstärkung, die eine Glaszusammensetzung umfasst, die enthält:

50 bis 90 mol-% $TeO_2$;
**dadurch gekennzeichnet, dass** die Glaszusammensetzung ferner umfasst:
5 bis 45 mol-% eines ersten Metalloxids eines Elements, ausgewählt aus der Gruppe bestehend aus Nb, W und Ti; und
5 bis 30 mol-% eines zweiten anderen Metalloxids eines Elements, ausgewählt aus der Gruppe bestehend aus Nb, W und Ti.

**14.** Verwendung einer optischen Faser gemäss Anspruch 13 für die Raman-Verstärkung, in der der Molprozentsatz von $TeO_2$ in der Glaszusammensetzung 65 bis 85 % ist.

**15.** Verwendung einer optischen Faser gemäss Anspruch 13 oder 14 für die Raman-Verstärkung, in der der Molprozentsatz des ersten Metalloxids 5 bis 30 % ist.

**16.** Verwendung einer optischen Faser gemäss mindestens einem der Ansprüche 13 bis 14 für die Raman-Verstärkung, in der der Molprozentsatz des zweiten Metalloxids 5 bis 20 % ist.

**17.** Verwendung einer optischen Faser gemäss mindestens einem der Ansprüche 13 bis 16 für die Raman-Verstärkung, in der die Glaszusammensetzung ferner ein Oxid eines Metalls umfasst, das ausgewählt ist aus der Gruppe bestehend aus Y, Sc, Al, Ga, Ge, P, Li, Na, K, Rb, Cs, Mg, Ca, Sr, Be, B, Zn.

**18.** Verwendung einer optischen Faser gemäss mindestens einem der Ansprüche 13 bis 17 für die Raman-Verstärkung, in der die Glaszusammensetzung zumindest ein Nioboxid umfasst.

**19.** Verwendung einer optischen Faser gemäss Anspruch 18 für die Raman-Verstärkung, in der die Glaszusammensetzung ein Wolframoxid und ein Nioboxid umfasst.

**20.** Verwendung einer optischen Faser gemäss Anspruch 18 für die Raman-Verstärkung, in der die Glaszusammensetzung ein Nioboxid und ein Titanoxid umfasst.

**21.** Verwendung einer optischen Faser gemäss mindestens einem der vorhergehenden Ansprüche 13 bis 20 für die Raman-Verstärkung, wobei die optische Faser einen Kernteil und einen Mantelteil umfasst, wobei zumindest der Kernteil aus einer Glaszusammensetzung, wie in mindestens einem der Ansprüche 13 bis 20 definiert, hergestellt ist.

22. Verfahren zur Erhöhung mindestens eines der Parameter, ausgewählt aus der Raman-Bandweitenverbreiterung und thermischen Stabilität einer optischen Faser, die eine binäre Glaszusammensetzung, die Telluroxid und ein erstes Metalloxid eines Elements, ausgewählt aus Nb, W, Ti, einschliesst, umfasst, welches die Herstellung einer zumindest ternären Glaszusammensetzung, die das Telluroxid, das erste Metalloxid und eine vorgegebene Menge eines zweiten anderen Metalloxids eines Elements, ausgewählt aus Nb, W, Ti, umfasst, und Ziehen einer optischen Faser, welche diese zumindest ternäre Glaszusammensetzung enthält, umfasst, wobei das Verfahren den Schritt der Kontrolle der Erdiummenge umfasst, so dass diese niedriger ist als 100 ppm.

## Revendications

1. Amplificateur Raman comprenant au moins une fibre optique (2) et au moins un laser de pompage (3a), optiquement couplé à ladite fibre optique, ledit laser de pompage étant adapté pour émettre un rayonnement de pompage à une longueur d'onde $\lambda_p$, dans lequel amplificateur ladite fibre optique (2) comprend un verre de tellurite approprié pour le renforcement de l'effet Raman et comprenant de 50 à 90 % en moles de $TeO_2$, **caractérisé en ce que** ce verre comprend en outre :

   - de 5 à 45 % en moles d'un premier oxyde métallique d'un élément choisi dans l'ensemble constitué par les niobium, tungstène et titane,
   - et de 5 à 30 % en moles d'un deuxième oxyde métallique, différent du premier, d'un élément choisi dans l'ensemble constitué par les niobium, tungstène et titane.

2. Amplificateur Raman conforme à la revendication 1, dans lequel la proportion de $TeO_2$ dans ledit verre vaut de 65 à 85 % en moles.

3. Amplificateur Raman conforme à la revendication 1 ou 2, dans lequel la proportion dudit premier oxyde métallique vaut de 5 à 30 % en moles.

4. Amplificateur Raman conforme à la revendication 1 ou 2, dans lequel la proportion dudit premier oxyde métallique vaut de 10 à 25 % en moles.

5. Amplificateur Raman conforme à l'une des revendications précédentes, dans lequel la proportion dudit deuxième oxyde métallique vaut de 5 à 20 % en moles.

6. Amplificateur Raman conforme à l'une des revendications précédentes, dans lequel ledit verre de tellurite comprend en outre un oxyde d'un métal choisi dans l'ensemble formé par les yttrium, scandium, aluminium, gallium, germanium, phosphore, lithium, sodium, potassium, rubidium, césium, magnésium, calcium, strontium, béryllium, bore et zinc.

7. Amplificateur Raman conforme à l'une des revendications précédentes, dans lequel le verre comprend au moins un oxyde de niobium.

8. Amplificateur Raman conforme à la revendication 7, dans lequel le verre comprend un oxyde de niobium et un oxyde de tungstène.

9. Amplificateur Raman conforme à la revendication 7, dans lequel le verre comprend un oxyde de niobium et un oxyde de titane.

10. Amplificateur Raman conforme à la revendication 1, dans lequel ledit verre de tellurite comprend de 50 à 90 % en moles de $TeO_2$, de 5 à 30 % en moles d'oxyde de niobium et de 5 à 30 % en moles d'oxyde de tungstène.

11. Amplificateur Raman conforme à l'une des revendications précédentes, dans lequel ledit verre ne contient pratiquement pas d'erbium.

12. Liaison de télécommunication optique comprenant un chemin à fibre optique permettant de transmettre un signal optique, et au moins un amplificateur Raman conforme à l'une des revendications précédentes, optiquement couplé en un point quelconque dudit chemin à fibre optique.

13. Emploi, en vue d'une amplification Raman, d'une fibre optique comprenant une composition de verre qui comprend de 50 à 90 % en moles de $TeO_2$,
    **caractérisé en ce que** cette composition de verre comprend en outre :

    - de 5 à 45 % en moles d'un premier oxyde métallique d'un élément choisi dans l'ensemble constitué par les niobium, tungstène et titane,
    - et de 5 à 30 % en moles d'un deuxième oxyde métallique, différent du premier, d'un élément choisi dans l'ensemble constitué par les niobium, tungstène et titane.

14. Emploi, pour amplification Raman, d'une fibre optique définie dans la revendication 13, dans laquelle la proportion de $TeO_2$ dans ladite composition de verre vaut de 65 à 85 % en moles.

15. Emploi, pour amplification Raman, d'une fibre optique définie dans la revendication 13 ou 14, dans laquelle la proportion dudit premier oxyde métallique vaut de 5 à 30 % en moles.

16. Emploi, pour amplification Raman, d'une fibre optique définie dans la revendication 13 ou 14, dans laquelle la proportion dudit deuxième oxyde métallique vaut de 5 à 20 % en moles.

17. Emploi, pour amplification Raman, d'une fibre optique définie dans l'une des revendications 13 à 16, dans laquelle ladite composition de verre comprend en outre un oxyde d'un métal choisi dans l'ensemble constitué par les yttrium, scandium, aluminium, gallium, germanium, phosphore, lithium, sodium, potassium, rubidium, césium, magnésium, calcium, strontium, béryllium, bore et zinc.

18. Emploi, pour amplification Raman, d'une fibre optique définie dans l'une des revendications 13 à 17, dans laquelle ladite composition de verre comprend au moins un oxyde de niobium.

19. Emploi, pour amplification Raman, d'une fibre optique définie dans la revendication 18, dans laquelle ladite composition de verre comprend un oxyde de niobium et un oxyde de tungstène.

20. Emploi, pour amplification Raman, d'une fibre optique définie dans la revendication 18, dans laquelle ladite composition de verre comprend un oxyde de niobium et un oxyde de titane.

21. Emploi d'une fibre optique en vue d'une amplification Raman, selon l'une des revendications 13 à 20 précédentes, laquelle fibre optique comprend un coeur et une gaine, dont au moins ledit coeur est fait d'une composition de verre définie dans l'une de ces revendications 13 à 20.

22. Procédé permettant d'augmenter au moins un paramètre, choisi parmi l'élargissement de bande Raman et la stabilité thermique, d'une fibre optique comprenant une composition de verre binaire contenant de l'oxyde de tellure et un premier oxyde métallique d'un élément choisi dans l'ensemble constitué par les niobium, tungstène et titane, lequel procédé comporte le fait de préparer une composition de verre au moins ternaire contenant dudit oxyde de tellure, dudit premier oxyde métallique et, en une proportion prédéterminée, un deuxième oxyde métallique, différent du premier, d'un élément choisi dans l'ensemble formé par les niobium, tungstène et titane, et le fait d'en tirer une fibre optique comprenant ladite composition de verre au moins ternaire, et lequel procédé comporte le fait d'y limiter la proportion d'erbium à une valeur inférieure à 100 ppm.

Fig. 1

Fig. 2

**Fig. 3**

EP 1 525 647 B1

Fig. 4

Fig. 5